# EUROPEAN PATENT APPLICATION

(11) **EP 2 320 340 A1**
(43) Date of publication of application: **11.05.2011**
(21) Application number: 09809643.1
(22) Date of filing: 14.04.2009
(51) Int. Cl.: G06F 17/50, H01B 13/012

(54) **CROSS-SECTION LAYOUT CALCULATION DEVICE, CROSS-SECTION LAYOUT CALCULATION METHOD, AND CROSS-SECTION LAYOUT CALCULATION PROGRAM**

(30) Priority: 25.08.2008 JP 2008214904
(71) Applicant: Yazaki Corporation, Minato-ku Tokyo 108-8333 (JP); Yokohama National University, Yokohama-shi Kanagawa 240-8501 (JP)
(72) Inventor: YAMADA, Takahiro, Yokohama-shi Kanagawa 240-8501 (JP); INOUE, Yoshihiro, Kosai-shi Shizuoka 431-0431 (JP)
(74) Representative: Viering, Jentschura & Partner
(86) International application number: PCT/JP2009/057477
(87) International publication number: WO 2010/023988

(57) **Abstract**

A technique of computing a realistic cross-section layout of a wire bundle which corresponds to the initial arrangement of wires. Geometrical data are obtained by a geometrical data obtaining means (11a), and the layout data corresponding to the geometrical data is obtained by layout data obtaining means (11b). Boundary data is calculated based on the layout data by boundary data calculation means (11c), and bundling shape data corresponding to the boundary data and showing the shape of the cross-section layout of the wire bundle is obtained by a bundling shape data obtaining means (11d). The boundary data is deformed toward the bundling shape data by a boundary data deformation means (11e), and the layout data are is adjusted to an arrangement of each cross-sectional shape by massing all of the plurality of cross-sectional shapes, which arrangement is by calculating each movement of the plurality of cross-sectional shapes in the boundary data according to a contact between boundary data and the cross-sectional shape, or a contact between each cross-sectional shape. The cross-section layout data based on the adjusted layout data is outputted by a cross-section layout data outputting means (11g).

## Description

### TECHNICAL FIELD

This invention relates to a system, a method, and a program of computing a cross-section layout of a wire bundle in which a plurality of wires is bundled.

### BACKGROUND ART

A wiring harness, which is formed by bundling a plurality of electric wires for electrically connecting electronic apparatus and electronic components, is wired in a vehicle and in a room. Nowadays, the wiring harness is required to be compacted without a drop in electric performance in the view of improving space factor. Therefore, in a stage of designing, more precise computing of an outline of a wiring harness is required.

The applicant already proposed a method of computing wire packing as shown in Patent documents 1 and 2. In the method of computing according to Patent document 2, by setting a layout condition of the plural of wires and by initially arranging the plurality of wires randomly so as not to be overlapped on each other, a containing circle of packing a plurality of wires is computed for each of initial arrangements by repeating predetermined trial times, and data about the containing circle and positions of plural circles are calculated. Based on the data about the positions of the plural circles, it is judged whether or not the layout condition is satisfied. At the only time when it is judged that the layout condition is satisfied, the data about the containing circle and the positions of the plural circles are outputted for displaying.

### CITATION LIST

Patent Document 1: Japan Patent Publication Application No. 2004-127917
Patent Document 2: Japan Patent Publication Application No. 2005-173789

### SUMMAERY OF INVENTION

### Objects to be solved

In the above methods according to the Patent document 2, there is a random process in computing processes. Therefore, initial arrangement of the wires cannot be stored so that the results of computing are random. When a wiring harness is formed by bundling a plurality of wires, some wires may be possibly moved from the initial arrangement of the wires to an inconceivable position, so that the result of computing becomes unfeasible. In addition, according to the usual method, any shape other than bundling a plurality of small circles with a large circle can not be computed, so that the method can not be applied for various shapes of cross-sections of any wiring harnesses.

For solving the above problem, an object of the present invention is to provide a system, a method, and a program of applicably computing a cross-section layout of a wire bundle, in which a plurality of wires is bundled, corresponding to an initial arrangement of the wires.

### How to attain the object of the present invention

In order to overcome the above problems and attain the object, the present invention claimed in claim 1 is to provide a system of computing a cross-section layout 10 in a cross-section of a wire bundle, in which a plurality of wires is bundled, which system includes geometrical data obtaining means 11a for obtaining geometrical data defining each cross-sectional shape of the plurality of wires; layout data obtaining means 11b for obtaining layout data showing an initial arrangement of the cross-sectional shape defined by the geometrical data within a predetermined area, which geometrical data are obtained by the geometrical data obtaining means 11a; boundary data calculating means 11c for calculating boundary data, which surrounds all of the plurality of cross-sectional shapes arranged in the predetermined area, based on the layout data obtained by the layout data obtaining means 11b; bundling shape data obtaining means 11d for obtaining bundling shape data showing a shape of the cross-section layout; boundary data deforming means 11e for deforming the boundary data correspondingly to the bundling shape data obtained by the bundling shape data obtaining means 11d; layout data adjusting means 11f for adjusting the layout data to an arrangement of each cross-sectional shape by massing all of the plurality of cross-sectional shapes, which arrangement is by calculating each movement of the plurality of cross-sectional shapes in the boundary data according to at least one of contact between the boundary data deformed by the boundary data deforming means 11e and the cross-sectional shape and contact between each cross-sectional shape; and cross-section layout data outputting means 11g for outputting cross-section layout data showing the cross-section layout based on the layout data adjusted by the layout data adjusting means 11f.

According to the system of computing a cross-section layout of an invention described in claim 1, the geometrical data are obtained by the geometrical data obtaining means 11a, and the layout data corresponding to the geometrical data are obtained by the layout data obtaining means 11b. The boundary data base on the layout data are calculated by the boundary data calculating means 11c, and the bundling shape data corresponding to the boundary data and showing the shape of the cross-section layout of the wire bundle are obtained by the bundling shape data obtaining means 11d. The boundary data are deformed correspondingly to the bundling shape data by the boundary data deforming means 11e; and the layout data are adjusted corresponding to the arrangement of the each cross-sectional shape by massing all of the plurality of cross-sectional shapes by the layout data adjusting means 11f, which arrangement is by calculating the each movement of the plurality of cross-sectional shapes in the boundary data according to the contact between the boundary data and the cross-sectional shape, and the contact between each cross-sectional shape. Thereafter, the cross-section layout data based on the adjusted layout data are outputted by the cross-section layout data outputting means 11g to a display device or a communication device.

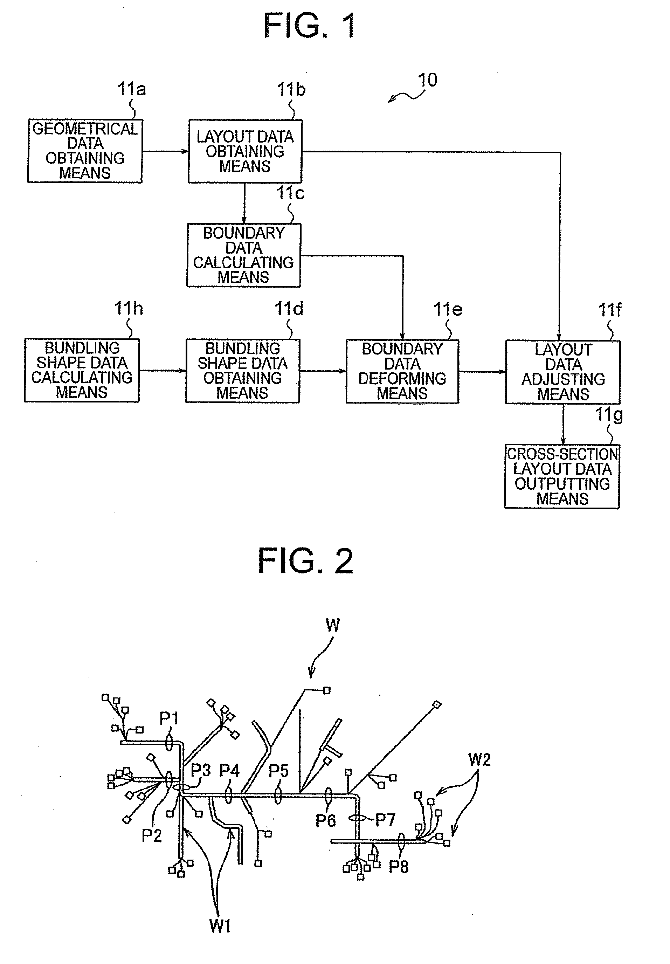

The system of computing a cross-section layout according to the invention described in claim 2, as shown in a block diagram of a basic structure of Fig. 1, is further characterized in that the layout data adjusting means 11f modifies the layout data to adjust each arrangement of the plurality of cross-sectional shapes so as to eliminate overlapped areas between the massed plurality of cross-sectional shapes after massing the plurality of cross-sectional shapes into the bundling shape data by the boundary data deforming means 11e.

According to the system of computing a cross-section layout described in claim 2, the plurality of cross-sectional shapes are massed in the bundling shape data by the boundary data deforming means 11e, and each arrangement of the plurality of cross-sectional shapes is adjusted by the layout data adjusting means 11f so as to eliminate overlapped area between the massed plurality of cross-sectional shapes and thereby, the layout data are modified.

The system of computing a cross-sectional layout according to the invention described in claim 3, as shown in the basic structural illustration of Fig. 1, is characterized of further including bundling shape data calculating means 11h for calculating the bundling shape data based on the sum of the cross-sectional area of the plurality of cross-sectional shapes defined by the geometrical data, and further characterized in that the bundling shape data obtaining means 11d is means for obtaining the bundling shape data calculated by the bundling shape data calculating means 11h.

According to the system of computing a cross-section layout described in claim 3, the bundling shape data are calculated based on the sum of cross-sectional areas of the plurality of cross-sectional shapes by the bundling shape data calculating means 11h, and the bundling shape data are obtained by the bundling shape data obtaining means 11d.

A method of computing a cross-section layout according to an invention described in claim 4, for calculating the cross-section layout in a cross-section of a wire bundle, in which a plurality of wires is bundled, is characterized of including the steps of obtaining geometrical data, which defines each cross-sectional shape of the plurality of wires; obtaining layout data showing an initial arrangement of the cross-sectional shape defined by the obtained geometrical data in a predetermined area; calculating boundary data, which surrounds all of the plurality of cross-sectional shapes arranged in the predetermined area, based on the obtained layout data; obtaining bundling shape data showing a shape of the cross-section layout; deforming the boundary data correspondingly to the obtained bundling shape data; adjusting the layout data to an arrangement of each cross-sectional shape by massing all of the plurality of cross-sectional shapes, which arrangement is by calculating each movement of the plurality of cross-sectional shapes in the boundary data according to at least one of contact between boundary data deformed by the step of deforming the boundary data and the cross-sectional shape and contact between each cross-sectional shape; and outputting cross-section layout data showing the cross-section layout based on the adjusted layout data.

According to the method of computing a cross-section layout of the invention described in claim 4, the geometrical data corresponding to the wires to be bundled are obtained, and the layout data corresponding to the geometrical data are obtained. The boundary data base on the layout data are calculated, and the bundling shape data corresponding to the boundary data and showing the shape of the cross-section layout of the wire bundle are obtained. The boundary data are deformed correspondingly to the bundling shape data; and the layout data are adjusted corresponding to an arrangement of the each cross-sectional shape by massing all of the plurality of cross-sectional shapes, which arrangement is by calculated by the each movement of the plurality of cross-sectional shapes in the boundary data according to the contact between boundary data and the cross-sectional shape, and the contact between each cross-sectional shape. Thereafter, the cross-section layout data based on the adjusted layout data are outputted to a display device or a communication device.

In order to overcome the above problems and attain the object, the present invention is to provide a program of computing a cross-section layout according to an invention described in claim 5, the program for use in a computer to perform as means of computing a cross-section layout in a cross-section of a wire bundle, in which a plurality of wires is bundled, as shown in Fig. 1, which includes geometrical data obtaining means 11a for obtaining geometrical data defining each cross-sectional shape of the plurality of wires; layout data obtaining means 11b for obtaining the layout data showing an initial arrangement of the cross-sectional shape defined by the geometrical data, which are obtained by the geometrical data obtaining means 11a, within a predetermined area; boundary data calculating means 11c for calculating boundary data, which surrounds all of the plurality of cross-sectional shapes arranged in the predetermined area, based on the layout data obtained by the layout data obtaining means 11b; bundling shape data obtaining means 11d for obtaining bundling shape data showing a shape of the cross-section layout; boundary data deforming means 11e for deforming the boundary data correspondingly to the bundling shape data obtained by the bundling shape data obtaining means 11d; layout data adjusting means 11f for adjusting the layout data to an arrangement of each cross-sectional shape by massing all of the plurality of cross-sectional shapes, which arrangement is by calculating each movement of the plurality of cross-sectional shapes in the boundary data according to at least one of contact between the boundary data deformed by boundary data deforming means 11e and the cross-sectional shape and contact between each cross-sectional shape; and cross-section layout data outputting means 11g for outputting cross-section layout data showing the cross-section layout based on the layout data adjusted by the layout data adjusting means 11f.

According to the program of computing a cross-section layout of the invention described in claim 5, the geometrical data corresponding to the wires to be bundled are obtained, and the layout data corresponding to the geometrical data are obtained by the computer. The boundary data base on the layout data are calculated, and the bundling shape data corresponding to the boundary data and showing the shape of the cross-section layout of the wire bundle are obtained. The boundary data are deformed correspondingly to the bundling shape data; and the layout data are adjusted corresponding to an arrangement of the each cross-sectional shape by massing all of the plurality of cross-sectional shapes, which arrangement is by calculating the each movement of the plurality of cross-sectional shapes in the boundary data according to at least one of the contact between boundary data and the cross-sectional shape and the contact between each cross-sectional shape. Thereafter, the cross-section layout data based on the adjusted layout data are outputted to a display device or a communication device.

### Effects of the Invention

According to the present inventions described in claims 1, 4 and 5, by obtaining the initial arrangement of the cross-sectional shape of the wire, and by obtaining the boundary data and the bundling shape data correspondingly, and by deforming the boundary data correspondingly to the bundling shape data, and by adjusting the layout data corresponding to the arrangement of the each cross-sectional shape by massing all of the plurality of cross-sectional shapes, which arrangement is by calculating the each movement of the plurality of cross-sectional shapes in the boundary data according to at least one of the contact between boundary data and the cross-sectional shape, and the contact between each cross-sectional shape, the cross-sectional shape can be transformed from the initial arrangement to the realistic bundling shape data. Thus, the cross-sectional shape can be prevented from moving to an unrealistic position. Therefore, a realistic cross-sectional layout of the wire bundle corresponding to the initial arrangement of the wires can be calculated, so that designing cross-section layout can be aided accurately.

According to the present invention described in claim 2, in addition to the effects of invention described in claim 1, by adjusting each arrangement of the plurality of cross-sectional shapes so as to eliminate overlapped area between the massed plurality of cross-sectional shapes when the plurality of cross-sectional shapes are massed in the bundling shape data, the cross-section layout data can be calculated more realistically corresponding to the initial arrangement of the wires.

According to the present invention described in claim 3, in addition to the effects of invention described in claim 1 or 2, by calculating the bundling shape data based on the sum of cross-sectional areas of the plurality of cross-sectional shapes and obtaining the bundling shape data, actions of setting and inputting by human operator are not required. Area efficiency of the plurality of cross-sectional shapes about the cross-section layout can be considered, and thereby designing cross-section layout can be aided accurately.

### BRIEF DESCRIPTION OF DRAWINGS

Fig. 1 is a block diagram showing a basic structure of a system of computing a cross-section layout according to the present invention;
Fig. 2 is an illustration showing an outline of a wiring harness;
   Fig. 3 is a block diagram showing an outline of the system of computing a cross-section layout;
Fig. 4 is an illustration of a program and each of data stored in a storage device in Fig. 3;
Fig. 5A and Fig. 5B are illustrations showing examples of boundary data;
Fig. 6A and Fig. 6B are illustrations showing examples of deforming the boundary data;
Fig. 7 is a flowchart showing an example of computing a cross-section layout by a CPU shown in Fig. 3;
Fig. 8 is an illustration showing an example of adjusting an overlap area of the cross-sectional shape;
Fig. 9 is an illustration showing an example of generating cross-section layout data;
Fig. 10 is an illustration showing an example of displaying the cross-section layout data;
Fig. 11 is an illustration showing operation state 1 of the system of computing a cross-section layout;
Fig. 12 is an illustration showing operation state 2 of the system of computing a cross-section layout;
Fig. 13 is an illustration showing operation state 3 of the system of computing a cross-section layout;
Fig. 14 is an illustration showing operation state 4 of the system of computing a cross-section layout;
Fig. 15 is an illustration showing operation state 5 of the system of computing cross-section layout;
Fig. 16 is an illustration showing operation state 6 of the system of computing a cross-section layout;
Fig. 17 is an illustration showing operation state 7 of the system of computing a cross-section layout;
Fig. 18 is an illustration showing operation state 8 of the system of computing cross-section layout;
Fig. 19 is an illustration showing operation state 9 of the system of computing a cross-section layout;
Fig. 20 is an illustration showing operation state 10 of the system of computing a cross-section layout;
Fig. 21 is an illustration showing operation state 11 of the system of computing a cross-section layout;
Fig. 22 is an illustration showing operation state 12 of the system of computing a cross-section layout;
Fig. 23 is an illustration showing operation state 13 of the system of computing a cross-section layout;
Fig. 24 is an illustration showing operation state 14 of the system of computing a cross-section layout;
Fig. 25A is an illustration showing other shape of the cross-section layout before calculating by the system of computing a cross-section layout;
Fig. 25B is an illustration showing other shape of the cross-section layout after calculating by the system of computing a cross-section layout;
Fig. 26A is an illustration showing a relation between the boundary data and bundling shape data for explaining the other example of deformation of the boundary data; and
Fig. 26B is an illustration showing an example of judging contact for explaining the other example of deformation of the boundary data.

### Explanation of Remarks

10 System of computing a cross-section layout
11a Geometrical data obtaining means (CPU)
11b layout data obtaining means (CPU)
11c Boundary data calculating means (CPU)
11d Bundling shape data obtaining means (CPU)
11e Boundary data deforming means (CPU)
11f Layout data adjusting means (CPU)
11g Cross-section layout data outputting means (CPU)
11h Boundary data calculating means (CPU)

### DESCRIPTION OF EMBODIMENTS

A preferable embodiment of calculating a cross-section layout by using a system of computing a cross-section layout according to the present invention is described with reference to Figs. 2-26.

In Fig. 2, a wiring harness W is formed by bundling a plurality of electric wires as wires. The wiring harness W includes electric wire bundles W1 formed by bundling the plurality of electric wires and connectors W2 arranged at ends of the electric wires. The electric wire includes a conductive core and a cover made of insulation synthetic resin and coving the core. In short, the electric wire is a covered wire. The connector W2 includes conductive terminals and an electric-insulation connector housing. The terminal is joined to the end of electric wire so as to connect electrically with the core of the electric wire. The connector housing is formed into a box shape so as to receive the terminal.

In the embodiment, the case that the electric wire is corresponded to the wire described in claims, and the electric wire bundle W1 is corresponded to the wire bundle described in claim is explained. The present invention is not limited in above example, and the other embodiments by using a hose or pipe as the wires for example can be considerable.

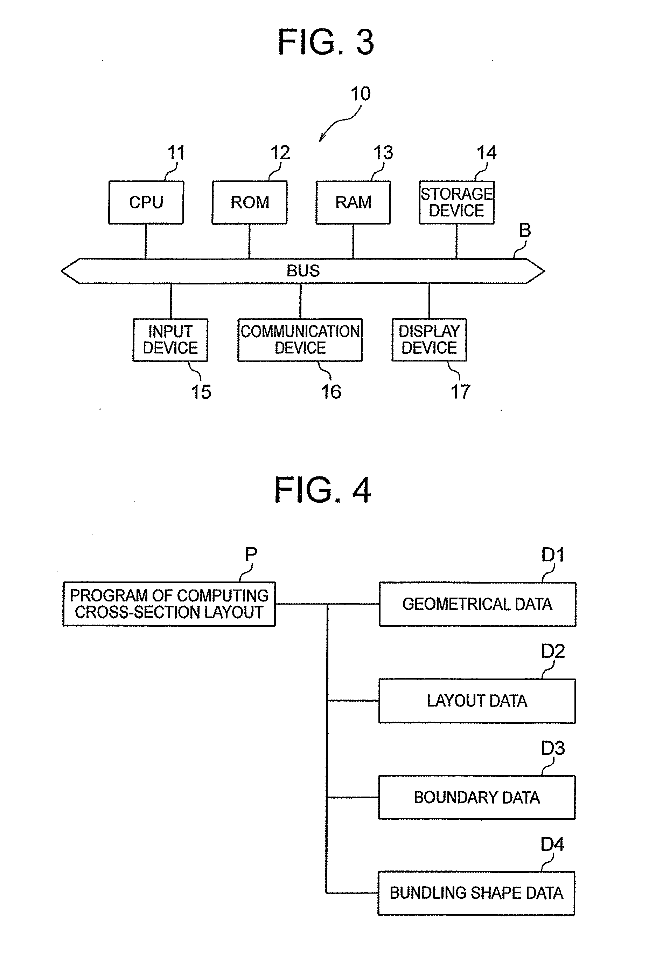

The system of computing a cross-section layout 10 in Fig. 3 uses a usual computer and includes a central processing unit (CPU) 11 controlling operations of the whole system according to a predetermined program. To the CPU 11, a read-only-memory ROM 12 storing the program for the CPU 11, and a random access memory RAM 13 having a working area storing various data required for processing by the CPU 11 are connected through a BUS B.

A storage device 14 is connected through the BUS B to the CPU 11, and a hard disk device or a large capacity memory is applied for the storage device 14. The storage device 14 has a memory area storing various programs, for example a program of computing a cross-section layout P, and a variety of data, for example geometrical data D1, layout data D2, boundary data D3, and bundling shape data D4. The program of computing a cross-section layout P is installed through a CD-ROM or downloaded through the Internet and stored in the storage device 14.

The program of computing a cross-section layout P is a program to operate the computer to perform as means for calculating a cross-section layout of the wiring harness formed by bundling the plurality of electric wires. The program of computing a cross-section layout P is a program to operate the computer to perform as geometrical data obtaining means 11a for obtaining geometrical data D1 defining each cross-sectional shape of the plurality of wires; layout data obtaining means 11b for obtaining layout data D2 showing an initial arrangement of the cross-sectional shape defined by the geometrical data D1, which are obtained by the geometrical data obtaining means 11a, within a predetermined area; boundary data calculating means 11c for calculating boundary data D3, which surrounds all of the plurality of cross-sectional shapes arranged in the predetermined area, based on the layout data D2 obtained by the layout data obtaining means 11b; bundling shape data obtaining means 11d for obtaining bundling shape data D4 showing a shape of the cross-section layout; boundary data deforming means 11e for deforming the boundary data D3 correspondingly to the bundling shape data D4 obtained by the bundling shape data obtaining means 11d; layout data adjusting means 11f for adjusting the layout data to an arrangement of each cross-sectional shape by massing all of the plurality of cross-sectional shapes, which arrangement is by calculating each movement of the plurality of cross-sectional shapes in the boundary data according to at least one of contact between boundary data deformed by boundary data deforming means 11e and the cross-sectional shape and contact between each cross-sectional shape; and cross-section layout data outputting means 11g for outputting cross-section layout data showing the cross-section layout based on the layout data adjusted by the layout data adjusting means 11f.

The geometrical data D1 includes data showing each cross-sectional shape and each size of electric wires to be bundled. The cross-sectional shape is exampled by circle, any shape of continued line by a plurality of lines, triangle, quadrilateral and shape by polyline, and the data can be defined by radius for circle, width and height for quadrilateral, and coordinates of each position for shape by polyline.

The layout data D2 includes data showing arrangements of the above-mentioned cross-sectional shapes in a predetermined area. The predetermined area means a 2-dimensional area to be defined freely for calculating the cross-section layout of the above electric wire bundle W1. The layout data D2 are exampled by coordinate data about any X-Y coordinates to be formed with each component for each axis of the X-Y coordinates in the predetermined area. The layout data D2 is stored corresponding to the geometrical data D1 in the storage device 14.

In embodiments, the geometrical data D1 and the layout data D2 can be previously stored, and also obtained at a time of calculating through a communication device 16 from the other device and stored to the storage device 14.

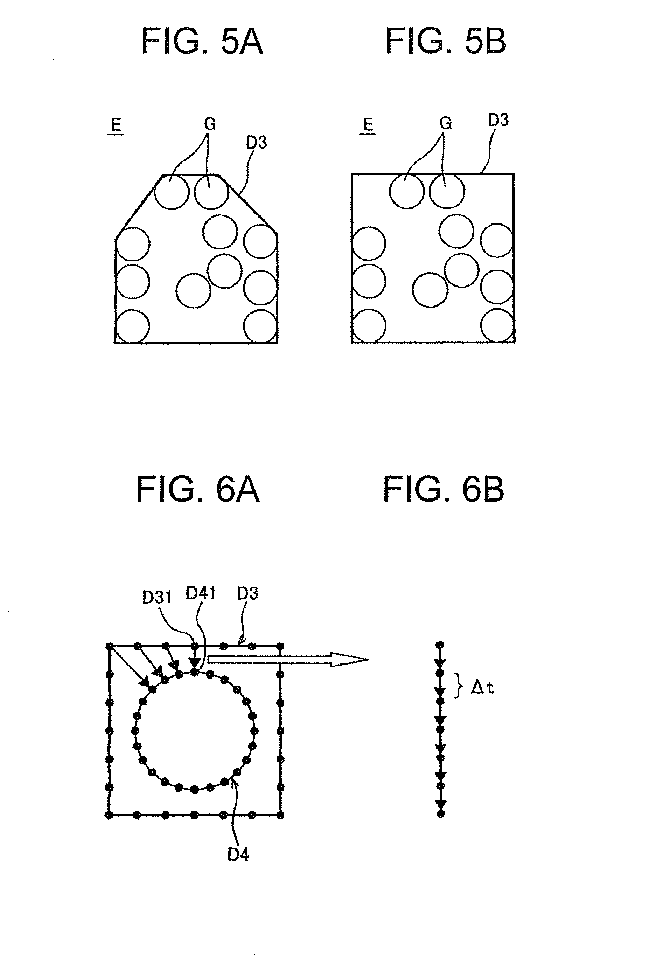

The boundary data D3 includes any data of position coordinates, shape and size for defining a frame-shape boundary surrounding all of a plurality of cross-sectional shapes G arranged in the predetermined area E based on the above layout data D2, as shown in Fig. 5. The boundary data D3 can be defined by a boundary inputted by a user, or can be calculated automatically based in the plurality of cross-sectional shapes G according to performance of the system of computing a cross-section layout 10. The method of calculating the boundary data D3 is exampled by calculating a projecting envelope shape led from an outer shape of all of cross-sectional shapes G as shown in Fig. 5A, or by calculating any shape of rectangle or circle enveloping all of the cross-sectional shapes G as shown in Fig. 5B.

The bundling shape data D4 are defined freely inside the boundary data D3 as shown in Fig. 6, so as to show the cross-sectional shape of the electric wire bundle W1 formed by bundling the plurality of electric wires. The bundling shape data are generated based on input data inputted by the user with an electric pen, or by calculation by a predetermined method.

The method of calculating automatically the bundling shape data D4 is exampled by calculating based on the minimum shape or the maximum shape when bundling the plural cross-sectional shapes G with circle. When calculating the bundling shape data D4 based on the minimum shape, the minimum shape is defined by a circle corresponding to an area efficiency of 100%, and a sum of area S is calculated by summing each area of the plurality of cross-sectional shapes G, and a radius r1 of the minimum shape (=SQRT (S/π) is calculated from the sum of area S. Thus, the bundling shape data D4 are determined.

When calculating the bundling shape data D4 based on the maximum shape, the maximum shape is defined by a circle corresponding to an area efficiency of 50%, and a sum of area S is calculated by summing each area of the plurality of cross-sectional shapes G, and a radius r2 of the maximum shape (=SQRT (2*S/π) is calculated from a twice value of the sum of area S. Thus, the bundling shape data D4 are determined.

A method of deforming the boundary data D3 is exampled by generating the boundary data D3 and the bundling shape data D4 by using polylines as shown in Fig. 6, and by making each point D31 of each polyline corresponding to each point D41 of each polyline as shown in Fig. 6A. The point D31 of the boundary data D3 is moved toward the point D41 with a predetermined divided step Δt by dividing a length between the point D31 and corresponding point D41, so that the boundary shape data D3 are deformed to a shape close to the bundling shape data D4. When using time as the divided step Δt, Δt=0.05 seconds is for example defined optionally. The polyline is not limited for the method of deforming the boundary data D3, and various methods capable to judge a contact between the boundary data D3 and the cross-sectional shape G can be used.

The above CPU 11 is connected through the BUS B with an input device 15, the communication device 16, and a display device 17. The input device 15 includes a keyboard and a mouse and outputs input data by the user operation to the CPU 11. A communication unit such as a LAN card and a modem for a mobile phone is used as the communication device 16 so as to output received data to the CPU 11, and transmit data inputted from the CPU 11 to a assigned address.

Various display units such as a liquid crystal device display and a CRT are used as the display device 17. The display device 17 displays various data by control by the CPU 11. In other words, the display device 17 displays various images showing cross-section layout data based on various data.

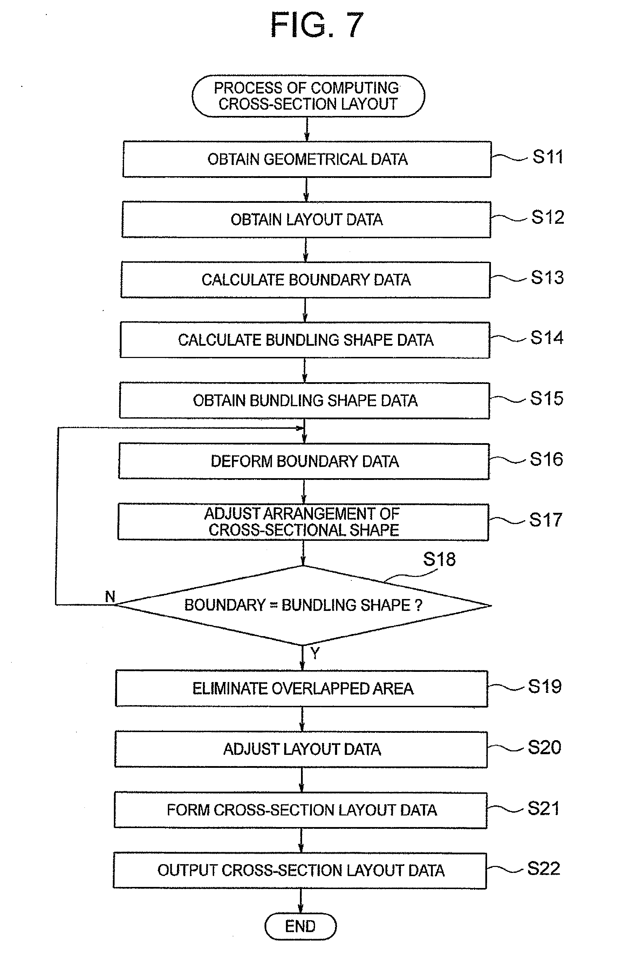

One example of process of computing a cross-section layout when the CPU 11 executes the program of computing a cross-section layout P stored in the storage device 14 will be described in accordance with the flowchart shown Fig. 7. For simplifying the description, it is assumed that the plurality of electric wires is bundled into a circle shape for the flowchart shown in Fig. 7.

When the program of computing a cross-section layout P is executed by the CPU 11, the geometrical data D1 corresponding to the electric wires structuring the above electric wire bundle W1 are obtained from the storage device 14 and stored in the RAM 13 in Step S11. The layout data D2 corresponding to the geometrical data D1 are obtained from the storage device 14 and stored in the RAM 13 in Step S12. Thereafter, the process proceeds to Step S13.

The boundary data D3 by polylines as shown in Fig. 5 are calculated based on the geometrical data D1 and the layout data D2 in the RAM 13, and stored in the RAM 13 in Step S13. The sum of area of the plurality of cross-sectional shapes is calculated based on the geometrical data D1 in the RAM 13, and a radius is calculated by executing process of calculating bundling shape based on the sum of area and a predetermined condition (above mentioned area efficiency), and the bundling shape data D4 as polylines are calculated based on the radius in Step S14. The bundling shape data D4 are obtained from process of calculating the bundling shape, and stored in the RAM 13 in Step S15. Thereafter, the process proceeds to Step S16.

The method of obtaining the bundling shape data D4 is exampled for various embodiments by a method of displaying an image for setting boundary at the display device 17 so as to motivate the user to set boundary and obtaining the bundling shape data D4 generated based on input data from the input device 15, or a method of obtaining the bundling shape data D4 from a predetermined memory area.

Each point D31 of the boundary data D3 is moved at the predetermined divided step Δt toward the corresponding point D41 of the bundling shape data D4, and the boundary data D3 is changed (deformed) as shown in Fig. 6, in Step S16. The process proceeds to Step S17.

In Step S17, each movement of the plurality of cross-sectional shapes in the boundary data is calculated according to contact between the boundary data D3 and the plurality of cross-sectional shapes Gby calculation aboutmaterial strength of a collision between the boundary data D3 and the plurality of cross-sectional shapes G and a collision between each cross-sectional shape G, and each new position of the plurality of cross-sectional shapes G is calculated, and the layout data D2 stored in the RAM 13 is changed to be at the new position. The process proceeds to Step S18.

For calculating the each movement of the plurality of circle cross-sectional shapes G, various methods used in a simulation analysis such as known Distinct Element method (DEM), Moving Particle Semi-implicit Method, Molecular Dynamics method, Finite Element Method can be applied. When Distinct Element method is applied, by using each calculation formula applied for evaluating a relative displacement of an element at a contact point, a direction and an amount of the movement of each cross-sectional shape G is calculated to take action-reaction between each cross-sectional shape G and surrounding cross-sectional shape G, or each cross-sectional shape G and boundary data D3 into account. Thus, the new position of each cross-sectional shape G is calculated.

In Step S18, it is judge whether or not the boundary data D3 are deformed to the bundling shape date D4 (boundary data D3 = bundling shape data D4). When it is judged that the boundary data D3 are not deformed to the bundling shape data D4 (N in Step S18), the process returns to Step S16, and the boundary data D3 are moved at the predetermined divided step Δt toward the bundling shape data D4. Such above series of processes is repeated. When it is judged that the boundary data D3 are deformed to the bundling shape data D4 (Y in Step S18), the process proceeds to Step S19.

In the embodiment, a case when the boundary data D3 are deformed to the bundling shape data D4 is explained. The present invention does not limits the case, but various cases such as by massing the plurality of cross-sectional shapes G close to the shape of the bundling shape data D4 can be applied.

In Step S19, the cross-sectional shape G is adjusted by moving in a predetermined manner so as to eliminate an overlapped area when the plurality of cross-sectional shapes G massed based on the new layout data D2 stored in RAM 13 has the overlapped area. When the overlapped area is eliminated and the layout of each cross-sectional shape G is determined, the layout data D2 stored in RAM 13 is updated to be the layout after eliminating the overlapped area. The process proceeds to Step S21.

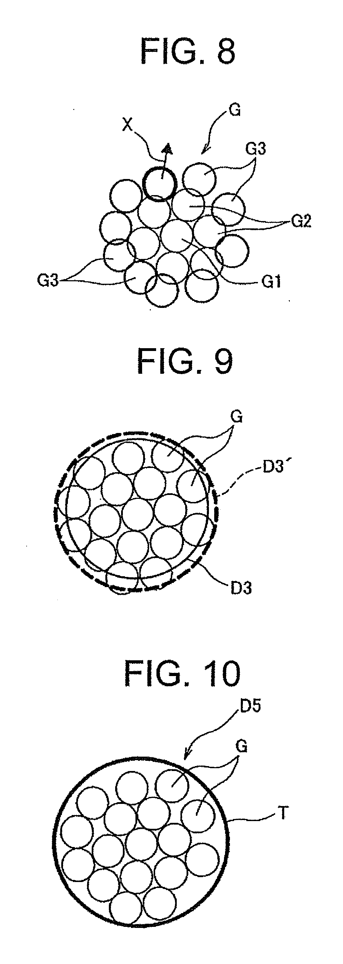

An example of the predetermined manner for eliminating is explained here with reference to Fig. 8. First, the position of the cross-sectional shape G1 around the center as a predetermined start position is fixed. The cross-sectional shapes G2 arranged around the cross-sectional shape G1, which the cross-sectional shapes G2 are not overlapped with the cross-sectional shape G1, are fixed. The cross-sectional shapes G2 which is overlapped with the cross-sectional shape G1, is moved at a overlapped amount so as to eliminate the overlapped area by moving the cross-sectional shape G2 in a X direction, and the moved cross-sectional shape G2 at the new position is fixed. By applying similar processes about the cross-sectional shape G3 outer from the cross-sectional shape G2, the overlapped area in the cross-section layout of the electric wire bundle W1 can be eliminated.

In Step S21, a cross-section layout data D5 showing the cross-section layout of the electric wire bundle W1 are generated at the RAM 13 based on the layout data D2 stored in the RAM 13, and the process proceeds to Step S22. An example of a method of generating the cross-section layout is described with reference to Fig. 9. When the cross-sectional shape G exceeds the boundary data D3 after eliminating overlapped area of the plurality of cross-sectional shapes G, the center of the boundary data D3 is moved at any amount corresponding to an amount of the overlapped area (for example, 1/4 of the amount of the overlapped area) in a direction, in which the maximum amount of the overlapped area exist, so as to increase the boundary data D3 for eliminating the exceeding. By repeating the processes, the expanded boundary data D3' is calculated as a cross-section layout shape including all of the plurality of cross-sectional shapes G, and the cross-section layout data D5 is generated. The cross-section layout data D5 can be formed by any data structure according to a specification, such as data for showing directly the layout data of the cross-sectional shapes G, or data for showing visually the layout data.

In Step S22, the cross-section layout data D5 is outputted to the display device 17, and the cross-section layout data 5 shown in Fig. 10 is displayed in the display device 17. Thereafter, the process is ended. In the embodiment, a case in which the cross-section layout data D5 is data for displaying the plurality of cross-sectional shapes G and an outer surround T is described. The present invention is not limited this, and various embodiments can be applied, for example, the only outer surround T can be displayed, or an radius of the outer surround T can be further displayed.

As describing as mentioned above, the CPU 11 executes the cross-section layout calculating process as shown in Fig. 7, so that the CPU 11 performs the geometrical data obtaining means 11a, the layout data obtaining means 11b, the boundary data obtaining means 11c, the bundling data obtaining means 11d, the boundary data deforming means 11e, the layout data adjusting means 11f, the cross-section layout data outputting means 11g, and the bundling shape data calculating means 11h shown in Fig. 1. Step S11 in Fig. 7 corresponds to the geometrical data obtaining means 11a, Step S12 corresponds to the layout data obtaining means 11b, Step S13 corresponds to the boundary data obtaining means 11c, Step S15 corresponds to the bundling data obtaining means 11d, Step S16 corresponds to the boundary data deforming means 11e, Steps S17, S20 correspond to the layout data adjusting means 11f, Step S22 corresponds to the cross-section layout data outputting means 11g, and Step S14 corresponds to the bundling shape data calculating means 11h.

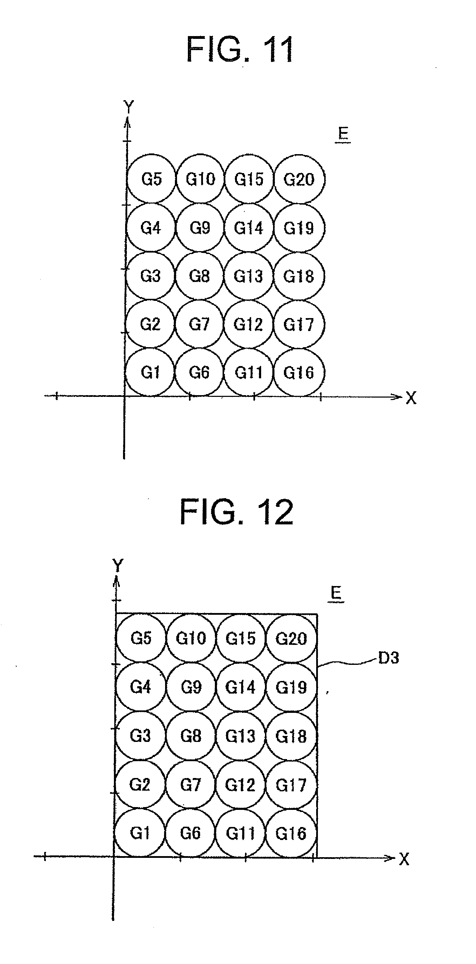

An example of operation (action) of the above system of computing cross-section layout 10 will be described with reference to Figs. 11-24. The predetermined area is defined in the X-Y plane area.

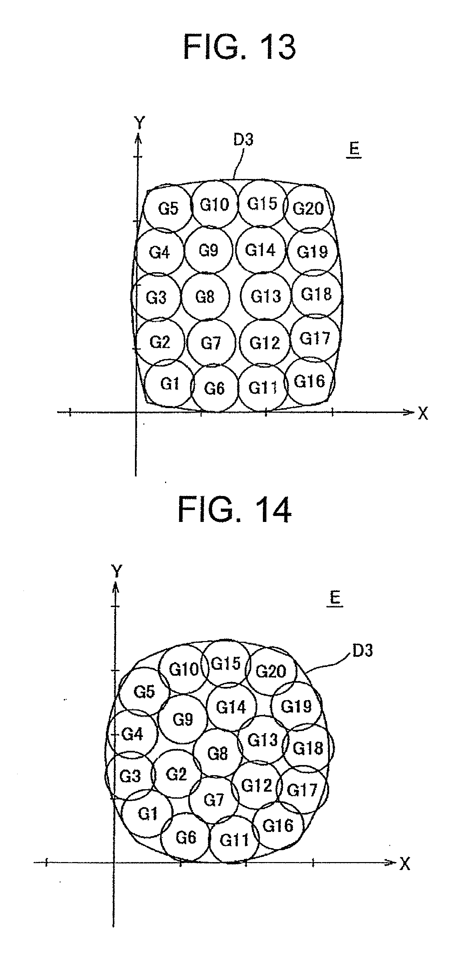

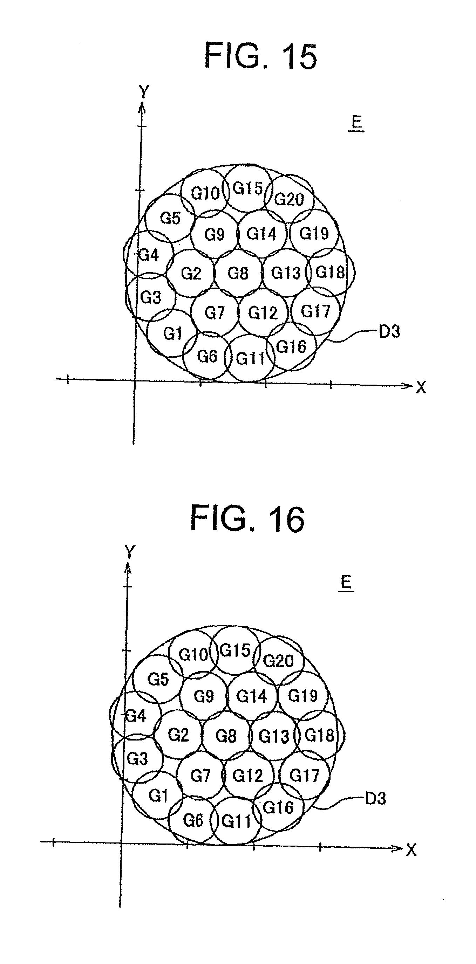

The system of computing cross-section layout 10 obtains the geometrical data D1 and the layout data D2 corresponding to the geometrical data D1, and then, arranges 20 pieces round-shape cross-sectional shapes G1-G20 in a predetermined area E as shown in Fig. 11. The system of computing cross-section layout 10 calculates the boundary data D3 surrounding all of the cross-sectional shapes G1-G20 as shown in Fig. 11. The system of computing cross-section layout 10 obtains the bundling data D4 corresponding to the boundary data D3, and deforms gradually the rectangular boundary data D3 toward the round bundling shape data D4 as shown in Figs. 13 and 14, and deforms the boundary data D3 until the bundling shape data D4 to be objected, as shown in Fig. 15.

In the case, the cross-sectional shapes G1-G20 are moved by the contact between the deformed boundary data D3 and themselves. A collision between the boundary data D3 and the cross-sectional shapes G1-G20 and a collision between each cross-sectional shape G1-G20 are calculated about material strength by Distinct Element Method, and the arrangement of the cross-sectional shapes G1-G20 is changed. The boundary data D3 are deformed until the bundling shape data D4 shown in Fig. 15, and tentative positions of the cross-sectional shapes G1-G20 are calculated.

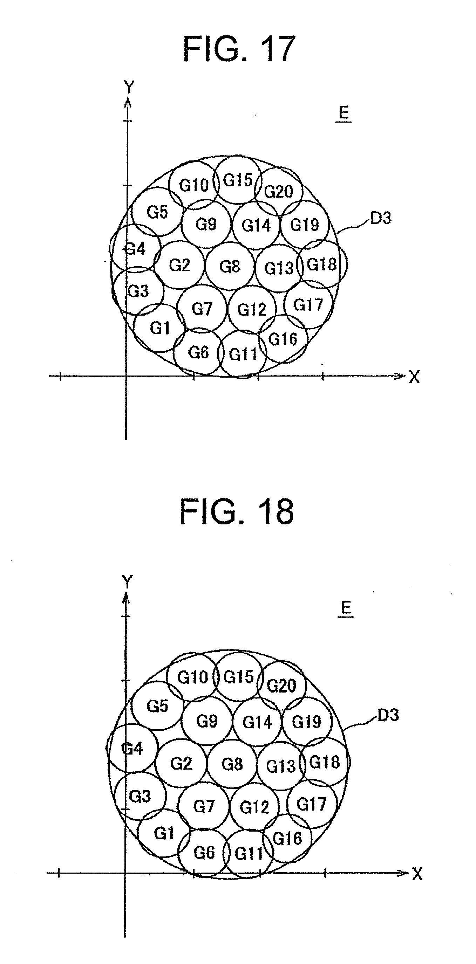

The cross-sectional shape G8 is located at the center as shown in Fig. 16, so that the cross-sectional shape G8 is fixed in the position. The cross-sectional shapes G2, G12, G14 and the like arranged around the cross-sectional shape G8 are sequentially moved so as to eliminate overlapped area with the cross-sectional shape G8. The cross-sectional shapes G2, G7, G9, G12, G13 and G14 are fixed around the cross-sectional shape G8 so as to contact with the cross-sectional shape G8, as shown in Fig. 17.

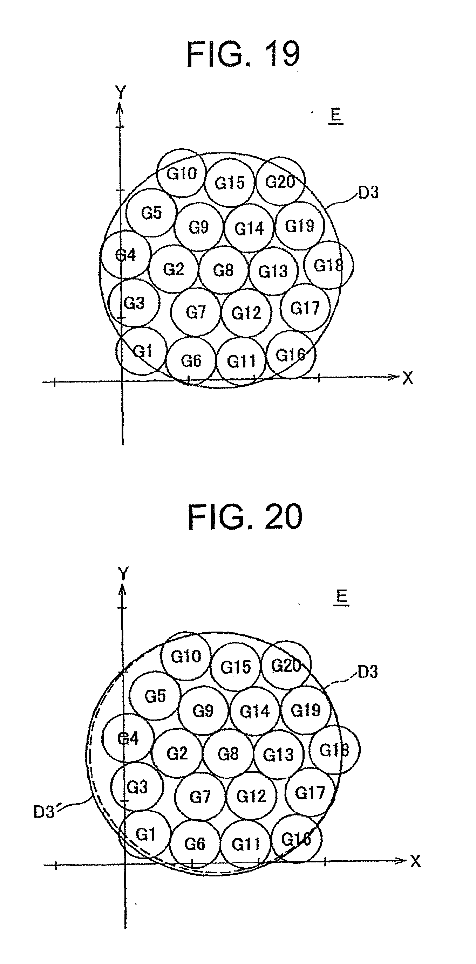

The cross-sectional shapes G1, G3, G4, G5, G6, G10, G11, G15, G16, G17, G18, G19, G20 are respectively moved so as to eliminate each overlapped area between the cross-sectional shape G2, G7, G9, G12, G13, G14 and cross-sectional shapes G1, G3, G4, G5, G6, G10, G11, G15, G16, G17, G18, G19, G20, and the boundary data D3 is also expanded, then all of the cross-sectional shapes G1-G20 are fixed as shown in Fig. 19.

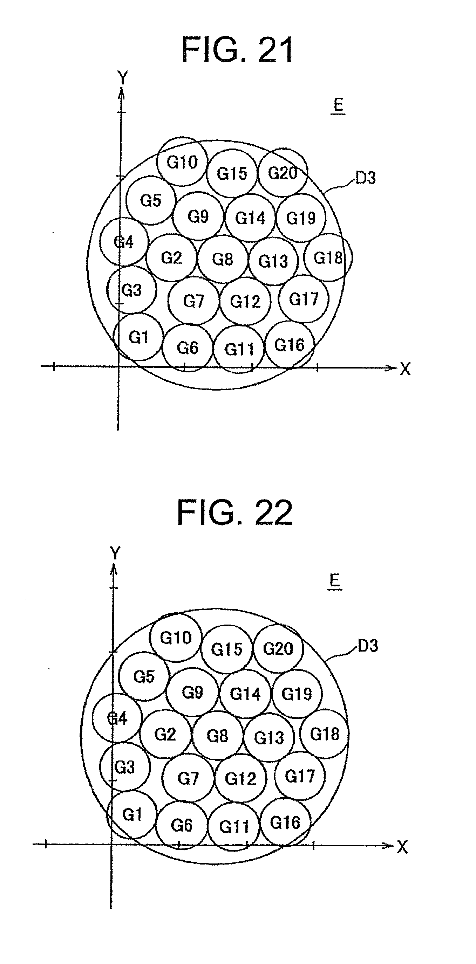

The cross-sectional shapes G1, G10, G16, G18 and G20 exceed the boundary data D3, so that the center of the boundary data D3 is moved toward the cross-sectional shape G1 to expand to be boundary data D3' as shown in Fig. 20. The boundary data D3 is rearranged as shown in Fig. 21. The cross-sectional shapes G10, G16, G18, G20 exceed this new boundary data D3, so that the center of the boundary data D3 is moved so as to expand the boundary data D3, and the boundary data D3 is rearranged as shown in Fig. 22.

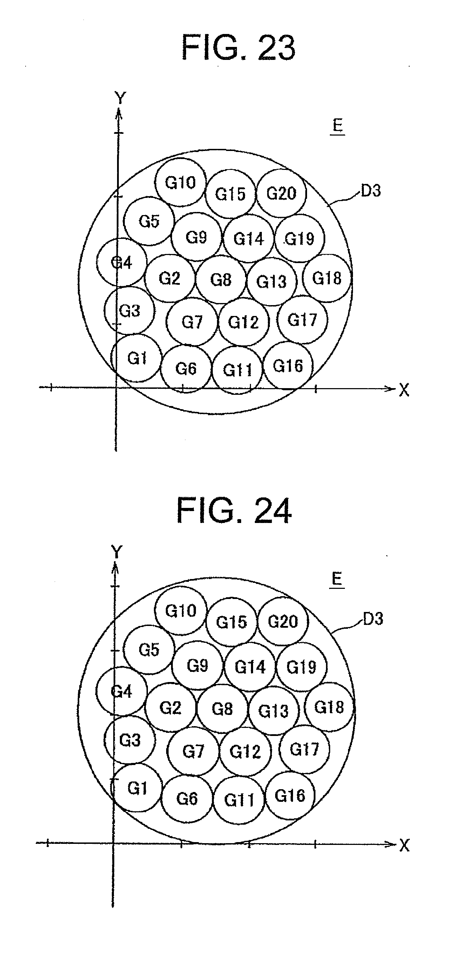

The boundary data D3 is determined so as to surround all of the cross-sectional shapes G1-G20 in the boundary data D3 as shown in Fig. 23 and the cross-section layout is arranged on the predetermined position as shown in Fig. 24. Calculating is finished and the layout data D2 in the RAM 13 is changed so as to show the arrangement of the cross-sectional shapes G1-G20. Then, the cross-section layout data is generated so as to make the boundary data D3 correspond to the outline of the electric wire bundle W1, and the cross-section layout data is displayed at the display device 17.

Each cross-section layout of the electric wire bundle W1 at calculation points P1-P8 shown in Fig. 2 is computed by the system of computing cross-section layout 10, and thereby, designing the wiring harness can be aided.

According to the system of computing a cross-section layout 10 mentioned above, by obtaining the initial arrangement of the cross-sectional shapes G corresponding to the electric wires; and obtaining the corresponding boundary data D3 and the bundling shape data D4; and adjusting the layout data to the arrangement of each cross-sectional shape G by massing all of the plurality of cross-sectional shapes G, which arrangement is by calculating each movement of the plurality of cross-sectional shapes G in the boundary data D3 according to at least one of the contact between the boundary data D3 and the cross-sectional shape G and the contact between each cross-sectional shape when deforming the boundary data D3 toward the bundling shape data D4; the cross-sectional shapes G can be moved from the initial arrangement to the conceivable bundling shape data D4, and it can be prevented that the cross-sectional shapes G move to unconceivable positions. Therefore, the conceivable cross-section layout of the electric wire bundle W1 corresponding to the initial arrangement of the electric wires can be computed, so that designing the cross-section layout can be securely aided.

The layout of the plurality of cross-sectional shapes G is adjusted so as to eliminate the overlapped area between each of the plurality of cross-sectional shapes G when the plurality of cross-sectional shapes G is massed to be contained in the bundling shape data D4. Thereby, the more realistic cross-section layout of the electric wire bundle W1 corresponding to the initial arrangement of the electric wires can computed.

In addition, by computing the bundling shape data D4 based on the sum of cross-sectional areas of the plurality of cross-sectional shapes G, the bundling shape data D4 is obtained, so that setting or inputting by an operator can not be required. The area efficiency of the plurality of cross-sectional shapes G about the cross-section layout can be also considered, and thereby designing cross-section layout can be aided accurately.

In the above embodiment, the case, in which the size and the shape of the cross-sectional shapes G are uniform and same for simplifying the description, is explained. The present invention can be applied to various cases such as the cross-sectional shapes having different shapes and different sizes, and the cross-sectional shapes having same shapes and different sizes.

In the above embodiment, the case, in which the size and the shape of the cross-sectional shapes G are uniform and same for simplifying the description, is explained. The present invention is not limited in above example, and the invention can be applied to compute cross-sectional shapes having various shapes.

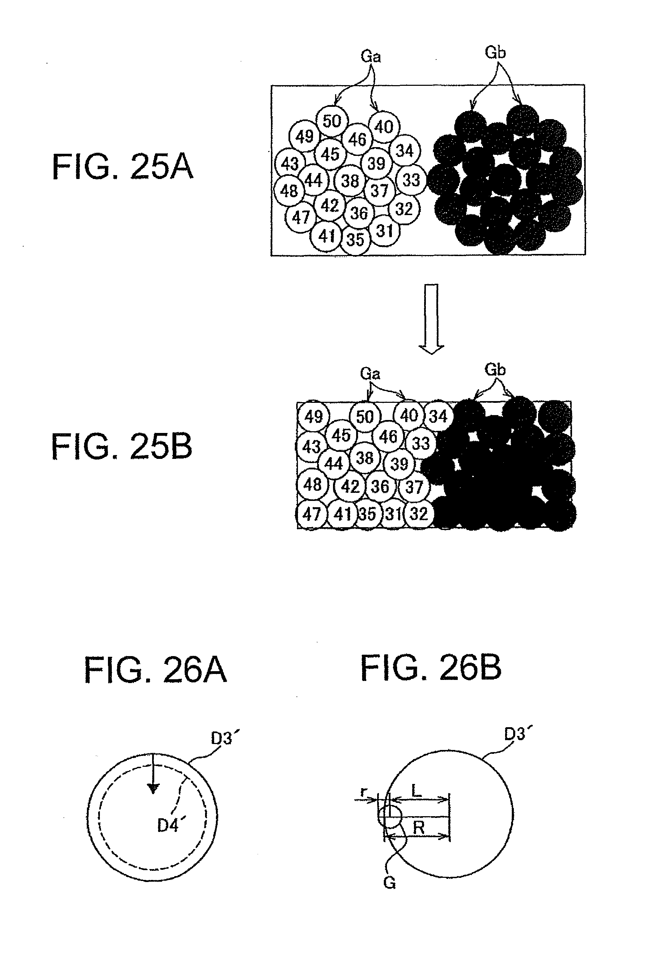

For example, as shown in Fig. 25A, the layout data D2 showing the initial arrangement including both of a group of plurality of cross-sectional shapes Ga and a group of plurality of cross-sectional shapes Gb are obtained, and the boundary data D3 surrounding the layout data D2 are obtained. The rectangular bundling shape data D4 is obtained, and the boundary data D3 is deformed as mentioned above. Thereby, the rectangular cross-section layout can be computed as shown in Fig. 25B. Thus, the cross-section layout data D5 showing a height and a width of the cross-section layout can be outputted and thereby designing a protector receiving a plurality of electric wires can be aided.

In the above embodiment, when each movement of the plurality of cross-sectional shapes in the boundary data D3 corresponding to the contact between the boundary data D3 and the cross-sectional shape G is computed, a body force (for example, gravity) or a surface force (for example, friction force) can be considered as a parameter for computing. Thereby, more realistic cross-section layout can be computed.

In the above mentioned method of deforming the boundary data D3, the case of deforming the rectangular boundary data D3 to the round shape is explained. The present invention is not limited in above example, and the round shape boundary data D3 can be deformed to the rectangular shape, or the rectangular boundary data D3 to the other rectangular shape, or various shape boundary data D3 can be deformed to any shape.

For example, when the round boundary data D3' is deformed to the round bundling shape data D4' as shown in Fig. 26A, the center of the boundary data D3' is positioned corresponding to the center of the bundling shape data D4'. On condition that a radius of the boundary data D3' is expressed as "R", a radius of the cross-sectional shape G is expressed as "r", and a distance between the center of the boundary data D3' and the center of the cross-sectional shape G is expressed as "L", contact between the boundary data D3' and the cross-sectional shape G can be judged as following:
on condition of L + r ≥ R, it is judged that the boundary data D3' contacts the cross-sectional shape G;
on condition of L + r < R, it is judged that the cross-sectional shape G is in the boundary data D3', but does not contact the boundary data D3'.

The present inventions are described based on the typical embodiments as mentioned above, but the present invention is not limited in above embodiments. Various change and modifications can be made with the scope of the present invention.

## Claims

1. A system of computing a cross-section layout in a cross-section of a wire bundle in which a plurality of wires is bundled, said system comprising:
geometrical data obtaining means for obtaining geometrical data defining each cross-sectional shape of the plurality of wires;
layout data obtaining means for obtaining layout data showing an initial arrangement of the cross-sectional shape defined by the geometrical data within a predetermined area, which geometrical data are obtained by the geometrical data obtaining means;
boundary data calculating means for calculating boundary data, which surrounds all of the plurality of cross-sectional shapes arranged in the predetermined area, based on the layout data obtained by the layout data obtaining means;
bundling shape data obtaining means for obtaining bundling shape data showing a shape of the cross-section layout;
boundary data deforming means for deforming the boundary data correspondingly to the bundling shape data obtained by the bundling shape data obtaining means;
layout data adjusting means for adjusting the layout data to an arrangement of each cross-sectional shape by massing all of the plurality of cross-sectional shapes, which arrangement is by calculating each movement of the plurality of cross-sectional shapes in the boundary data according to at least one of contact between the boundary data deformed by the boundary data deforming means and the cross-sectional shape and contact between each cross-sectional shape; and
cross-section layout data outputting means for outputting cross-section layout data showing the cross-section layout based on the layout data adjusted by the layout data adjusting means.

2. The system of computing a cross-section layout according to claim 1, wherein the layout data adjusting means modifies the layout data to adjust each arrangement of the plurality of cross-sectional shapes so as to eliminate overlapped areas between the massed plurality of cross-sectional shapes after massing the plurality of cross-sectional shapes into the bundling shape data by the boundary data deforming means.

3. The system of computing a cross-section layout according to claim 1 or 2 further comprising bundling shape data calculating means for calculating the bundling shape data based on the sum of the cross-sectional area of the plurality of cross-sectional shapes defined by the geometrical data, wherein the bundling shape data obtaining means is means for obtaining the bundling shape data calculated by the bundling shape data calculating means.

4. A method of computing a cross-section layout in a cross-section of a wire bundle in which a plurality of wires is bundled, said method comprising the steps of:
obtaining geometrical data, which defines each cross-sectional shape of the plurality of wires;
obtaining layout data showing an initial arrangement of the cross-sectional shape defined by the obtained geometrical data in a predetermined area;
calculating boundary data, which surrounds all of the plurality of cross-sectional shapes arranged in the predetermined area, based on the obtained layout data;
obtaining bundling shape data showing a shape of the cross-section layout;
deforming the boundary data correspondingly to the obtained bundling shape data;
adjusting the layout data to an arrangement of each cross-sectional shape by massing all of the plurality of cross-sectional shapes, which arrangement is by calculating each movement of the plurality of cross-sectional shapes in the boundary data according to at least one of contact between boundary data deformed by the step of deforming the boundary data and the cross-sectional shape, and contact between each cross-sectional shape; and
outputting cross-section layout data showing the cross-section layout based on the adjusted layout data.

5. A program of computing a cross-section layout, the program for use in a computer to perform as means of computing a cross-section layout in a cross-section of a wire bundle, in which a plurality of wires is bundled, said means comprising:
geometrical data obtaining means for obtaining geometrical data defining each cross-sectional shape of the plurality of wires;
layout data obtaining means for obtaining the layout data showing an initial arrangement of the cross-sectional shape defined by the geometrical data within a predetermined area, which geometrical data are obtained by the geometrical data obtaining means;
boundary data calculating means for calculating boundary data, which surrounds all of the plurality of cross-sectional shapes arranged in the predetermined area, based on the layout data obtained by the layout data obtaining means;
bundling shape data obtaining means for obtaining bundling shape data showing a shape of the cross-section layout;
boundary data deforming means for deforming the boundary data correspondingly to the bundling shape data obtained by the bundling shape data obtaining means;
layout data adjusting means for adjusting the layout data to an arrangement of each cross-sectional shape by massing all of the plurality of cross-sectional shapes, which arrangement is by calculating each movement of the plurality of cross-sectional shapes in the boundary data according to at least one of contact between the boundary data deformed by boundary data deforming means 11e and the cross-sectional shape and contact between each cross-sectional shape; and
cross-section layout data outputting means for outputting cross-section layout data showing the cross-section layout based on the layout data adjusted by the layout data adjusting means.
